# EUROPÄISCHE PATENTSCHRIFT

(11) **EP 1 748 008 B1**
(45) Veröffentlichungstag und Bekanntmachung des Hinweises auf die Patenterteilung: **24.10.2007**
(21) Anmeldenummer: 05016169.4
(22) Anmeldetag: 26.07.2005
(51) Int. Cl.: B65G 53/58

(54) **Vorrichtung zum pneumatischen Transport und/oder zur Beimengung von Schütt- oder Flüssiggütern**
Device for the pneumatic transport and/or the addition of bulk or liquid material
Dispositif de transport pneumatique et/ou l'ajout des matières en vrac ou liquides

(43) Veröffentlichungstag der Anmeldung: 31.01.2007
(73) Patentinhaber: AJO tec GmbH, 57258 Freudenberg (DE)
(72) Erfinder: Stein, Günter, 57078 Siegen (DE)
(74) Vertreter: Hafner, Dieter

(56) Entgegenhaltungen:
- GB-A- 736 207
- US-A- 1 970 405

## Beschreibung

Die Erfindung betrifft eine Vorrichtung zum Transport und/oder zur Beimengung von Schütt- oder Flüssiggütern, insbesondere von körnigen und/oder pulverartigen Materialien oder von Fluiden mit den weiteren Merkmalen des Patentanspruches 1.

Derartige Vorrichtungen weisen in der Regel eine Hauptstromleitung auf, die von einem Fördermedium durchströmt wird. Wird die Vorrichtung zur Beimengung von Gütern benutzt, d.h. um zusätzliche Bestandteile einem bereits vorhandenen fließ- oder schüttfähigem Gut beizumengen, dann wird die Hauptstromleitung von einem Basisgut durchströmt, dem das weitere Gut zugemischt wird.

Um den Transport oder Mischvorgang vornehmen zu können, mündet in die Hauptstromleitung eine Aufgabe- oder Mischleitung. Die Aufgabe- oder Mischleitung ist mit einem Behälter verbunden, gegebenenfalls unter Zwischenschaltung von Ventilen oder schleusenartigen Anordnungen, um dem Zufluß der zu fördemden oder beizumengenden Güter zur Vorrichtung steuern oder regeln zu können, siehe z.B. GB 736207.

Bei bekannten Vorrichtungen dieser Art tritt das Problem auf, daß es im Mündungsbereich der Aufgabe- oder Mischleitung in Folge von in die Aufgabe- oder Mischleitung abströmender Leckluft oder sonstiger Umstände zu Stauerscheinungen kommt. Insbesondere wenn Ventil- oder Schleusenelemente vorgesehen sind, kann es dort zu unerwünschter Strömungsbeeinflussung und damit zu Stauproblemen kommen.

Der Erfindung liegt die Aufgabe zugrunde, eine Vorrichtung mit den Merkmalen des Oberbegriffes des Anspruches 1 derart auszubilden, daß die Zuführung von Schüttgütern oder beizumengenden Gütern vergleichmäßig ist und Stauerscheinungen im Mündungsbereich vermieden werden. Diese Aufgabe wird durch die kennzeichnenden Merkmale des Anspruches 1 dadurch gelöst, daß in der Hauptstromleitung mindestens ein von dem Fördermedium und/oder dem Basisgut beidseitig umströmtes Strömungsbeschleunigungselement angeordnet ist, durch welches vor oder auch in der mindestens einem Mündung der Aufgabe- oder Mischleitung eine Unterdruckzone erzeugt wird.

Vorteilhafte Weiterbildungen der Erfindung ergeben sich aus den Unteransprüchen 2 - 22, ein Verfahren zum Betreiben der Vorrichtung ist in Anspruch 23 beschrieben, vorteilhafte Verwendungen der Vorrichtung in den Ansprüchen 24 und 25.

Als Kern der Erfindung wird es angesehen, im Bereich der Mündung der Aufgabe- oder Mischleitung mit einfachen Mitteln eine Unterdruckzone zu erzeugen. Gemäß der Lösung ist ein beidseitig umströmtes Strömungsbeschleunigungselement vorgesehen, z.B. ein tragflächenartiges Profil, das mit seiner Unterdruckseite, d.h. mit der Tragflächenoberseite der Mündung zugewandt ist. Umströmt das Fördermedium oder das Basisgut dieses Strömungsbeschleunigungselement, dann wird nach den Sätzen von Bemulli auf der Seite der größeren Strömungsgeschwindigkeit, d.h. auf der der Mündung zugewandten Seite ein Unterdruck erzeugt, der sich sehr vorteilhaft auf die Zuführung oder Beimischung des zu fördernden oder beizumengenden Gutes in den Bereich der Hauptstromleitung auswirkt. Leckluft, die in die Aufgabeleitung strömt, wird weitgehend vermieden. Der Unterdruck sorgt für die angestrebte gleichmäßige Zuführung von Schüttgütern, ein Druckverlust durch Leckluft wird vermieden. Zusätzliche Mischdüsen oder sonstige Maßnahmen zur Fluidisierung, z.B. mit Diffusoren sind nicht notwendig. Eine Erhöhung des Förderdruckes im Fördermedium ist nicht erforderlich, ebenso können zusätzliche Treibdüsen, die zusätzliche Energie benötigen würden, entfallen.

In Weiterbildung der Erfindung soll das Strömungsbeschleunigungselement verstellbar in der Hauptstromleitung angeordnet sein. Der Begriff "verstellbar" in diesem Zusammenhang hat mehrere Bedeutungen. Zunächst soll der Anstellwinkel des Strömungsbeschleunigungselementes bezogen auf die Hauptströmungsrichtung in der Hauptstromleitung verstellbar sein, d.h. je nach Form des Strömungsbeschleunigungselementes können die Unterdruckverhältnisse durch den Anstellwinkel des Elementes bezogen auf die Hauptströmungsrichtung variiert und damit optimal den Verhältnissen angepaßt werden.

Das Strömungsbeschleunigungselement soll auch in der Längsrichtung der Hauptstromleitung verschiebbar angeordnet sein, d.h. die Position des Strömungsbeschleunigungselementes relativ zur Mündung kann variiert werden, um optimale Verhältnisse einzustellen. Letztendlich ist auch vorgesehen, die Form des Strömungsbeschleunigungselementes selbst zu variieren, je nach Art der zu fördernden oder beizumengenden Güter oder des Basisgutes und der herrschenden Strömungsgeschwindigkeiten können damit optimale Druckverhältnisse eingestellt werden. Die Verstellung, Verschiebung oder Formvariation des Strömungsbeschleunigungselementes geschieht vorteilhafterweise motorisch. Das Strömungsbeschleunigungselement kann die Hauptstromleitung etwa mittig durchsetzen, es ist in Weiterbildung der Erfmdung aber auch möglich, eine Position des Strömungsbeschleuniguagselementes zu wählen, die von der Mittellängsachse abweicht und das Strömungsbeschleunigungselement etwas näher oder etwas weiter von der Mündung zu entfernen. Die Lagerung des Strömungsbeschleunigungselementes geschieht vorteilhafterweise auf einer die Hauptstromleitung quer durchsetzenden Stellachse, die motorisch angetrieben werden kann, um den Anstellwinkel zu verstellen.

Grundsätzlich ist es möglich, in der Hauptstromleitung eine Mehrzahl von Strömungsbeschleunigungselementen hintereinander anzuordnen, insbesondere dann, wenn mehrere Mündungsbereiche vorgesehen sind.

Zur Optimierung der Strömungsverhältnisse unmittelbar im Bereich des Strömungsbeschleunigungselementes können an den Enden Strömungsleitelemente angeordnet werden. Derartige Maßnahmen bei Tragflächen sind als Winglets an sich bekannt und wirken sich in überraschender Weise auch beim Einsatz solcher Profile in der Hauptstromleitung positiv aus.

Um die Strömungs- und Druckverhältnisse in dem oder den Mündungsbereich(en) zu kontrollieren, können Drucksensoren vorgesehen werden, die Einstellung des Strömungsbeschleunigungselementes geschieht dann motorisch in Abhängigkeit vom Ausgangswert des einem Strömungsbeschleunigungselement zugeordneten Drucksensors.

Insbesondere in Verbindung mit einer in einer Aufgabe- oder Mischleitung angeordneten Zellenradschleuse, die oberhalb von der Hauptstromleitung angeordnet ist, wirkt sich das Vorsehen eines Strömungsbeschleunigungselementes positiv aus.

Wird ein Strömungsbeschleunigungselement nicht längsverschiebbar in der Hauptstromleitung angebracht, sondern fest, dann empfiehlt sich seine Positionierung etwas stromabwärts von der Mittellängsachse des Mündungsbereiches der Aufgabe- oder Mischleitung.

Je nach Einsatzzweck der Vorrichtung kann es zweckdienlich sein, das Strömungsbeschleunigungselement mit einer abrasionsmindemden Oberflächenbeschichtung zu versehen oder die Oberfläche des Strömungsbeschleunigungselementes zu härten. Auch keramische Beschichtungen können einem allzu schnellen Verschleiß profilierter Strömungsteile entgegenwirken.

Die Erfindung ist anhand von vorteilhaften Ausführungsbeispielen in den Zeiclmungsfiguren näher erläutert. Diese zeigen:
- Fig. 1: eine Vorrichtung mit Zellenradschleuse zum Transport von Schüttgütern;
- Fig. 2: eine Vorrichtung zum Transport oder zur Beimengung von Schüttgütern mit zwei Zellenradschleusen;
- Fig. 3: eine schematische Darstellung eines in einer Hauptstromleitung angeordneten Strömuagsbeschleunigungselementes variabler Form;
- Fig.4: eine schematische Darstellung eines in einer Hauptstromleitung angeordneten Strömungsbeschleunigungselementes mit variablen Anstellwinkeln;
- Fig. 5: eine Vorrichtung zur Beimischung von Fluiden;

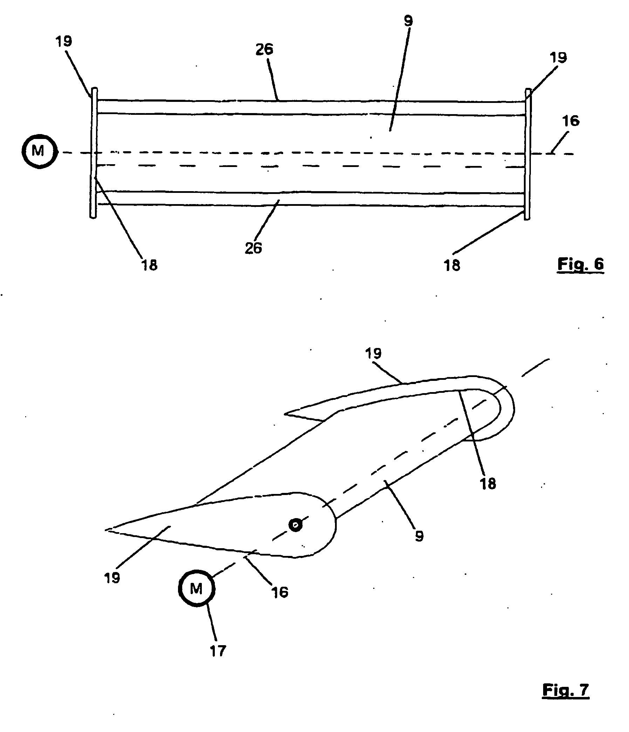

- Fig. 6: einen Querschnitt durch eine Hauptstromleitung mit Strömungsbeschleunigungselement mit endseitig angeordneten Strömungsleitelementen;
- Fig.7: eine perspektivische Darstellung des Strömungsbeschleunigungselementes gem. Fig. 6.

Die Vorrichtung 1 zum Transport oder zur Beimengung von Schüttgütern 2 oder Flüssiggütern 3 weist eine Hauptstromleitung 4 auf, in welche eine Aufgabeleitung 5 oder eine Mischleitung 6 mündet. Die Aufgabe- 5 oder Mischleitung 6 haben den Zweck, zu fördernde Güter in einen die Hauptstromleitung 4 durchströmenden Fördermedienstrom 7 oder in Basisgut 8 einzubringen, das die Hauptstromleitung 4 durchströmt.

Gemäß der Erfindung ist in der Hauptstromleitung 4 ein von dem Fördermedium 7 oder dem Basisgut 8 beidseitig umströmtes Strömungsbeschleunigungselement 9 angeordnet, durch welches vor oder in der Mündung 10 der Aufgabeleitung 5 oder Mischleitung 6 eine Unterdruckzone 11 erzeugt wird.

Das Strömungsbeschleunigungselement 9 ist in der Hauptstromleitung 4 verstellbar angeordnet, d.h. sein Anstellwinkel kann bezogen auf die Hauptströmungsrichtung 12 in der Hauptstromleitung 4 verstellt werden. Das Strömungsbeschleunigungselement 9 ist aber auch in Längsrichtung 13 der Hauptstromleitung 4 verschiebbar oder die Form des Strömungsbeschleunigungselementes 9 ist variierbar, um eine optimierte Unterdruckerzeugung im Bereich der Mündung 10 zu gewährleisten.

In Zeichnungsfig. 3 ist ein Strömungsbeschleunigungselement 9 dargestellt, dessen Nasenbereich 14 und Endbereich 15 gesondert oder simultan verstellbar sind, um die Form zu variieren.

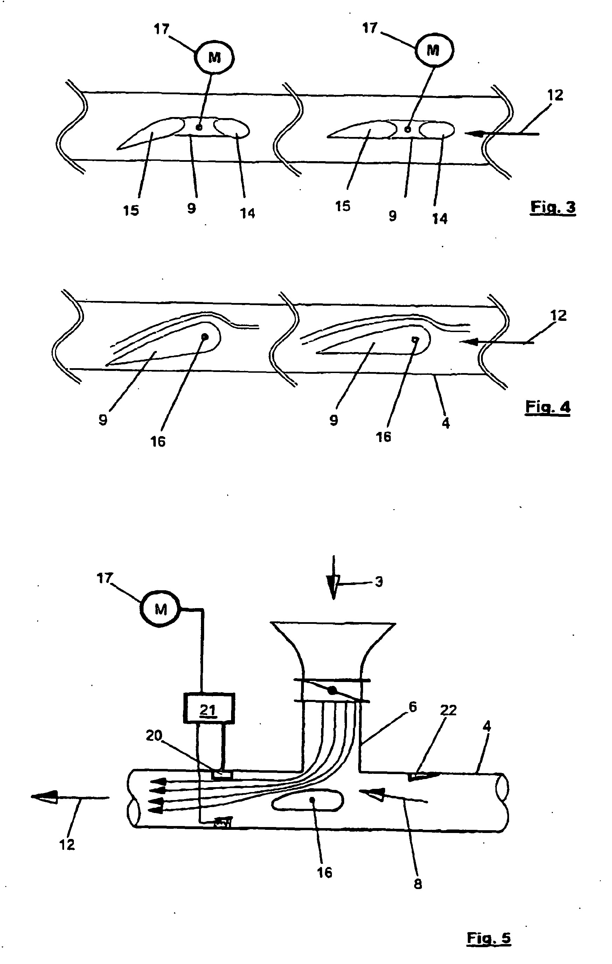

Gem. Fig. 4 ist das Strömungsbeschleunigungselement 9 auf einer die Hauptstromleitung 4 quer durchsetzenden Stellachse 16 angeordnet. Über einen nur schematisch dargestellten Motorantrieb 17, der unterschiedliche Motoreinheiten aufweisen kann, sind Anstellwinkel, Position und Form des Strömungsbeschleunigungselementes 9 zu verstellen. Es liegt auch im Rahmen der Erfindung, das formverstellbare Strömungsbeschleunigungselement 9 gem.

Fig. 3 bzgl. seines Anstellwinkels gem. Fig. 4 zu verstellen, um eine optimale Variationsbreite zu gewährleisten. Darüber hinaus können derartige Kombinationen von verstellbaren Strömungsbeschleunigungselementen 9 auch bzgl. ihrer Lage zur Mündung 10 verschoben werden.

Das Strömungsbeschleunigungselement 9 ist bei den Ausführungsformen als asymmetrisches Tragflächenprofil ausgebildet. Es sind aber auch andere Symmetrien oder Proportionen des Strömungsbeschleunigungselementes 9 im Rahmen der Erfindung denkbar, sofern sie geeignet sind, eine Unterdruckzone 11 im Bereich der Mündung 10 zu erzeugen.

Bei dem in den Zeichnungsfiguren 1 und 5 durchsetzt das Strömungsbeschleunigungselement 9 die Hauptstromleitung 4 etwa mittig und horizontal.

An den Enden 18 des Strömungsbeschleunigungselementes 9 sind Strömungsleitelemente 19 angeordnet, die einen Abriß der Strömung im Endbereich des Profils verhindern sollen, falls das Profil nicht bis unmittelbar zu den Wandungen der Hauptstromleitung 4 reicht. Es liegt aber auch im Rahmen der Erfindung, die Enden 18 des Strömungsbeschleunigungselementes 9 bündig an die Wandungen der Hauptstromleitung 4 anzupassen.

Im Bereich des oder der Strömungsbeschleunigungselemente(s) 9 ist mindestens eine Drucksensoreinrichtung 20 angeordnet, die mit einer Steuerschaltung 21 verbunden ist, um in Abhängigkeit vom Ausgangswert der Drucksensoreinrichtung 20 Position, Form oder Anstellwinkel des Strömungsbesehleunigungselementes 9 zu variieren. In die Steuerschaltung 21 können auch sensorisch erfaßte Geschwindigkeitswerte des Fördermediums 7 oder Basisguts 8 eingehen, darüber hinaus Temperatur und Art des Fördermediums 7 oder der zu fördernden oder beizumengenden Güter 2, 3.

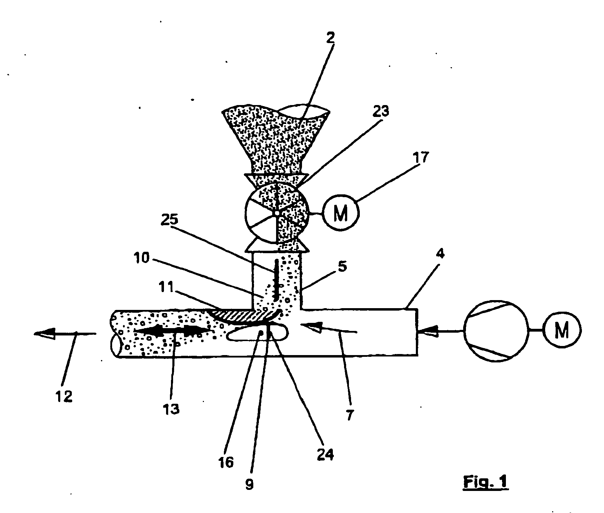

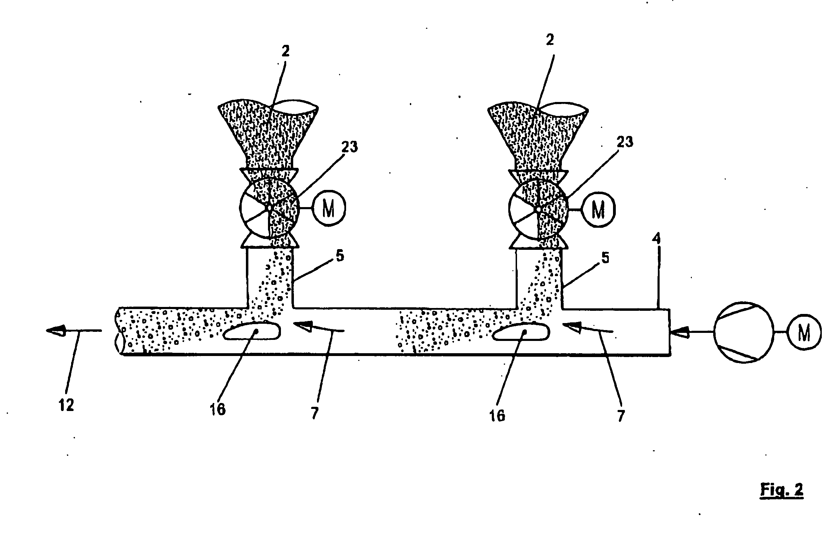

Es liegt auch im Rahmen der Erfindung, Strömungselemente 22 in Form von festen Leitschaufeln und dergleichen fest in der Hauptstromleitung 4 anzuordnen, wie dies in Zeichnungsfigur 5 dargestellt ist. In der Aufgabeleitung 5 ist bei den in Figuren 1 und 2 dargestellten Ausführungsbeispielen eine Zellenradschleuse 23 angeordnet, deren Drehgeschwindigkeit ebenfalls an die Verhältnisse der Vorrichtung 1 angepaßt werden kann und auch als Parameter in Steuerschaltung eingegeben werden kann. Der größte Querschnitt 24 des Strömungsbeschleunigungselementes 9 ist mit Vorteil etwas stromabwärts von der Mittellängsachse 25 der Mündung 10 der Aufgabe- 5 oder Mischleitung 6 angeordnet.

Die Strümungsbeschleunigungselemente 9 können eine keramische Beschichtung 26 aufweisen, die in Zeichnungsfigur 6 schematisch dargestellt ist.

### BEZUGSZEICHENLISTE

- 1: Vorrichtung
- 2: Schüttgüter
- 3: Flüssiggüter
- 4: Hauptstromleitung
- 5: Aufgabeleitung
- 6: Mischleitung
- 7: Fördermedienstrom
- 8: Basisgut
- 9: Strömungsbeschleunigungselement
- 10: Mündung
- 11: Unterdruckzone
- 12: Hauptströmungsrichtung
- 13: Längsrichtung
- 14: Nasenbereich
- 15: Endbereich
- 16: Stellachse
- 17: Motorantrieb
- 18: Enden v. 9
- 19: Strömungsleitelement
- 20: Drucksensoreinrichtung
- 21: Steuerschaltung
- 22: Strömungselement
- 23: Zellenradschleuse
- 24: Querschnitt
- 25: Mittellängsachse
- 26: Beschichtung

## Patentansprüche

1. Vorrichtung (1) zum Transport und/oder zur Beimengung von Schütt (2)- oder Flüssiggütern (3), insbesondere von körnigen und/oder pulverartigen Materialien oder von Fluiden, mit
- einer Hauptstromleitung (4) sowie
- mindestens einer in die Hauptstromleitung (4) mündenden Aufgabe- (5) oder Mischleitung (6),
-- um zu fördernde Güter in einen die Hauptstromleitung (4) durchströmenden Fördermedienstrom (7)
-- oder beizumengende Güter in ein die Hauptstromleitung (4) durchströmendes Basisgut (8) einzubringen, sowie
- einem in der Hauptstromleitung (4) mindestens von dem Fördermedium (7) und/oder dem Basisgut (8) beidseitig umströmten Strömungsbeschleunigungselement (9),
-- durch welches vor oder in der mindestens einen Mündung (10) der Aufgabe- (5) oder Mischleitung (6) eine Unterdruckzone (11) erzeugbar ist,
**dadurch gekennzeichnet, daß**
das Strömungsbeschleunigungselement (9) als ein quer zur Mittellängsachse (25) der Mündung (10) der Aufgabe- (5) oder Mischleitung (6), das heißtquer zur Beschickungsrichtung, angeordnetes und separates Element mit einem Tragflächenprofil ausgebildet ist, durch das Unterdruck erzeugt wird, der eine in Richtung der Hauptstromleitung wirkende Saugkraft ausübt.

2. Vorrichtung nach Anspruch 1,
**dadurch gekennzeichnet, daß**
das Strömungsbeschleunigungselement (9) verstellbar in der Hauptstromleitung (4) angeordnet ist.

3. Vorrichtung nach Anspruch 2,
**dadurch gekennzeichnet, daß**
der Anstellwinkel des Strömungsbeschleunigungselementes (9) bezogen auf die Hauptströmungsrichtung (12) in der Hauptstromleitung (4) verstellbar ist.

4. Vorrichtung nach Anspruch 2 oder 3,
**dadurch gekennzeichnet, daß**
das Strömungsbeschleunigungselement (9) in Längsrichtung (13) der Hauptstromleitung (4) verschiebbar angeordnet ist.

5. Vorrichtung nach Anspruch 2 - 4,
**dadurch gekennzeichnet, daß**
die Form des Strömungsbeschleunigungselementes (9) variierbar ist.

6. Vorrichtung nach einem der vorhergehenden Ansprüche,
**dadurch gekennzeichnet, daß**
ein Motorantrieb (17) zur Verstellung, Verschiebung oder Formvariation des Strömungsbeschleunigungselementes (9) vorgesehen ist.

7. Vorrichtung nach einem der vorhergehenden Ansprüche,
**dadurch gekennzeichnet, daß**
das Strömungsbeschleunigungselement (9) die Hauptstromleitung (4) etwa mittig durchsetzt.

8. Vorrichtung nach einem der vorhergehenden Ansprüche,
**dadurch gekennzeichnet, daß**
das Strömungsbeschleunigungselement (9) etwa horizontal in der Hauptstromleitung (4) angeordnet ist.

9. Vorrichtung nach einem der vorhergehenden Ansprüche,
**dadurch gekennzeichnet, daß**
das Strömungsbeschleunigungselement (9) auf einer die Hauptstromleitung (4) quer durchsetzenden Stellachse (16) angeordnet ist.

10. Vorrichtung nach Anspruch 10,
**dadurch gekennzeichnet, daß**
die Stellachse (16) motorisch antreibbar ist.

11. Vorrichtung nach einem der vorhergehenden Ansprüche,
**dadurch gekennzeichnet, daß**
in der Hauptstromleitung (4) eine Mehrzahl von Strömungsbeschleunigungselementen (9) hintereinander angeordnet sind.

12. Vorrichtung nach einem der vorhergehenden Ansprüche,
**dadurch gekennzeichnet, daß**
an den Enden (18) des/der Strömungsbeschleunigungselemente(s) (9) Strömungsleitelemente (19) angeordnet sind.

13. Vorrichtung nach einem der vorhergehenden Ansprüche,
**dadurch gekennzeichnet, daß**
im Bereich des/der Strömungsbeschleunigungselemente(s) (9) mindestens ein Drucksensor (20) angeordnet ist und das/die Strömungsbeschleunigungselement(e) (9) motorisch in Abhängigkeit vom Ausgangswert des Drucksensors (20) veränderbar ist (sind).

14. Vorrichtung nach einem der vorhergehenden Ansprüche,
**dadurch gekennzeichnet, daß**
in der Hauptstromleitung (4) stromauf- und/oder stromabwärts vom Strömungsbeschleunigungselement (9) Strömungselemente (22) angeordnet sind.

15. Vorrichtung nach einem der vorhergehenden Ansprüche,
**dadurch gekennzeichnet, daß**
die mindestens eine Aufgabe- (5) oder Mischleitung (6) von oben in die Hauptstromleitung (4) mündet.

16. Vorrichtung nach einem der vorhergehenden Ansprüche,
**dadurch gekennzeichnet, daß**
in der mindestens einen Aufgabe- (5) oder Mischleitung (6) eine Zellenradschleuse (23) angeordnet ist.

17. Vorrichtung nach einem der vorhergehenden Ansprüche,
**dadurch gekennzeichnet, daß**
der größte Querschnitt (24) des Strömungsbeschleunigungselementes (9) etwas stromabwärts von der Mittellängsachse (25) der Mündung (10) der Aufgabe- (5) oder Mischleitung (6) angeordnet ist.

18. Vorrichtung nach Anspruch 5,
**dadurch gekennzeichnet, daß**
das Profil des Strömungsbeschleunigungselementes (9) abhängig von der Strömungsgeschwindigkeit und/oder Dichte des Fördermediums (7) und/oder des Basisgutes (8) variierbar ist.

19. Vorrichtung nach einem der vorhergehenden Ansprüche,
**dadurch gekennzeichnet, daß**
eine Mehrzahl von Mischleitungen (6) hintereinander in die Hauptstromleitung (4) münden und unter jedem Mündungsbereich einer Mischleitung (6) ein Strömungsbeschleunigungselement (9) angeordnet ist.

20. Vorrichtung nach einem der vorhergehenden Ansprüche,
**dadurch gekennzeichnet, daß**
das Strömungsbeschleunigungselement (9) eine abrasionsmindemde Oberflächenbeschichtung (26) aufweist.

21. Vorrichtung nach einem der vorhergehenden Ansprüche,
**dadurch gekennzeichnet, daß**
die Oberfläche des Strömungsbeschleunigungselementes (9) gehärtet ist.

22. Vorrichtung nach einem der vorhergehenden Ansprüche,
**dadurch gekennzeichnet, daß**
die Beschichtung des Strömungsleitelementes (19) eine keramische Beschichtung (26) ist.

23. Verfahren zur Vermeidung von Leckluftströmen und/oder Materialstau im Mündungsbereich einer in eine Hauptstromleitung mündenden Material-Aufgabe- oder Mischleitung, durch welche körniges oder pulverartiges Material in einen Förderluftstrom der Hauptstromleitung einbringbar ist,
**dadurch gekennzeichnet, daß**
durch ein beidseitig umströmtes Strömungsbeschleunigungselement mit tragflächenartigem Profilquerschnitt, das quer zur Mündung der Aufgabe- oder Mischleitung angeordnet und als separates Element ausgebildet ist, ein Unterdruck erzeugt wird, der auf das Gut eine in Richtung der Hauptstromleitung wirkende Saugkraft ausübt.

24. Verwendung einer Vorrichtung mit den Merkmalen eines der Ansprüchen 1 - 22 zur Förderung von granulatartigen Verbrennungsrückständen.

25. Verwendung nach der Vorrichtung nach einem der Ansprüche 1 - 22 zur Beimischung von Flüssigkeiten.

## Claims

1. Apparatus (1) for the transportation and/or addition of loose materials (2) or liquid materials (3), more especially granular and/or pulverulent materials or fluids, said apparatus having
- a principal flow line (4), as well as
- at least one feed line (5) or mixer line (6) terminating in the principal flow line (4),
- in order to introduce materials, which are to be conveyed, into a conveying medium stream (7) flowing through the principal flow line (4),
- or in order to introduce materials, which are to be added, into a basic material (8) flowing through the principal flow line (4), as well as
- a flow acceleration element (9) which has at least the conveying medium (7) and/or the basic material (8) flowing therearound on both sides in the principal flow line (4),
- by means of which element a low-pressure zone (11) can be produced before or in the at least one opening (10) of the feed line (5) or mixer line (6),
**characterised in that** the flow acceleration element (9) is in the form of a separate element which is disposed transversely relative to the central longitudinal axis (25) of the opening (10) of the feed line (5) or mixer line (6), that is to say transversely relative to the loading direction, and has a supporting face profile, by means of which low pressure is produced, which exerts a suction force acting in the direction of the principal flow line.

2. Apparatus according to claim 1, **characterised in that** the flow acceleration element (9) is disposed in the principal flow line (4) in an adjustable manner.

3. Apparatus according to claim 2, **characterised in that** the angular disposition of the flow acceleration element (9) is adjustable relative to the principal flow direction (12) in the principal flow line (4).

4. Apparatus according to claim 2 or 3, **characterised in that** the flow acceleration element (9) is disposed so as to be displaceable in the longitudinal direction (13) of the principal flow line (4).

5. Apparatus according to claims 2 - 4, **characterised in that** the shape of the flow acceleration element (9) is variable.

6. Apparatus according to one of the preceding claims, **characterised in that** a motor drive (17) is provided for the adjustment, displacement or variation in shape of the flow acceleration element (9).

7. Apparatus according to one of the preceding claims, **characterised in that** the flow acceleration element (9) traverses the principal flow line (4) substantially centrally.

8. Apparatus according to one of the preceding claims, **characterised in that** the flow acceleration element (9) is disposed substantially horizontally in the principal flow line (4).

9. Apparatus according to one of the preceding claims, **characterised in that** the flow acceleration element (9) is disposed on an adjusting spindle (16) which transverses the principal flow line (4) transversely.

10. Apparatus according to claim 10, **characterised in that** the adjusting spindle (16) is motively drivable.

11. Apparatus according to one of the preceding claims, **characterised in that** a plurality of flow acceleration elements (9) are disposed one behind the other in the principal flow line (4).

12. Apparatus according to one the preceding claims, **characterised in that** flow guiding elements (19) are disposed on the ends (18) of the flow acceleration element(s) (9).

13. Apparatus according to one of the preceding claims, **characterised in that** at least one pressure sensor (20) is disposed in the region of the flow acceleration element(s) (9), and the flow acceleration element(s) (9) can be altered in a motive manner in dependence on the output value of the pressure sensor (20).

14. Apparatus according to one of the preceding claims, **characterised in that** flow elements (22) are disposed in the principal flow line (4) upstream and/or downstream of the flow acceleration element (9).

15. Apparatus according to one of the preceding claims, **characterised in that** the at least one feed line (5) or mixer line (6) terminates from above in the principal flow line (4).

16. Apparatus according to one of the preceding claims, **characterised in that** one bucket wheel charging valve (23) is disposed in the at least one feed line (5) or mixer line (6).

17. Apparatus according to one of the preceding claims, **characterised in that** the largest cross-section (24) of the flow acceleration element (9) is disposed somewhat downstream of the central longitudinal axis (25) of the opening (10) of the feed line (5) or mixer line (6).

18. Apparatus according to claim 5, **characterised in that** the profile of the flow acceleration element (9) is variable in dependence on the flow speed and/or density of the conveying medium (7) and/or of the basic material (8).

19. Apparatus according to one of the preceding claims, **characterised in that** a plurality of mixer lines (6) terminate one behind the other in the principal flow line (4), and a flow acceleration element (9) is disposed beneath each opening region of a mixer line (6).

20. Apparatus according to one of the preceding claims, **characterised in that** the flow acceleration element (9) has an abrasion-reducing surface coating (26).

21. Apparatus according to one of the preceding claims, **characterised in that** the surface of the flow acceleration element (9) is hardened.

22. Apparatus according to one of the preceding claims, **characterised in that** the coating of the flow guiding element (19) is a ceramic coating (26).

23. Method- of avoiding leaking airstreams and/or an accumulation of material in the opening region of a material feed line or mixer line, which terminates in a principal flow line, and through which granular or pulverulent material can be introduced into a conveying air stream of the principal flow line, **characterised in that** a low pressure is produced by a flow acceleration element, which has matter flowing therearound on both sides and has a profile cross-section of the supporting face type, which is disposed transversely relative to the opening of the feed line or mixer line and is in the form of a separate element, which low pressure exerts on the material a suction force acting in the direction of the principal flow line.

24. Use of an apparatus having the features of one of claims 1 - 22 for conveying granule-like combustion residues.

25. Use of the apparatus according to one of claims 1 - 22 for adding liquids.

## Revendications

1. Dispositif (1) de transport pneumatique et/ou d'ajout de matières en vrac (2) ou de matières liquides (3), en particulier de matières granulées et/ou poudreuses ou de fluides, avec
- une conduite d'écoulement principale (4) ainsi
- qu'au moins une conduite d'alimentation (5) ou de mélange (6) débouchant dans la conduite d'écoulement principale (4)
-- pour amener des matières à transporter dans un flux de fluides de transport (7) qui traverse la conduite d'écoulement principale (4)
-- ou des matières à ajouter dans une matière de base (8) qui traverse la conduite d'écoulement principale (4) ainsi
- qu'avec un élément d'accélération de l'écoulement (9) entouré des deux côtés au moins par le fluide de transport (7) et/ou par la matière de base (8) dans la conduite d'écoulement principale,
-- à travers lequel une zone de dépression (11) peut être générée avant ou dans la au moins une embouchure (10) de la conduite d'alimentation (5) ou de mélange (6),
**caractérisé en ce que**
l'élément d'accélération de l'écoulement (9) est réalisé sous forme d'élément séparé doté d'un profil en aile disposé transversalement à l'axe longitudinal médian (25) de l'embouchure (10) de la conduite d'alimentation (5) ou de mélange (6), c'est-à-dire transversalement au sens d'alimentation, par lequel est générée la dépression qui exerce une force d'aspiration agissant dans le sens de la conduite d'écoulement principale.

2. Dispositif selon la revendication 1,
**caractérisé en ce que**
l'élément d'accélération de l'écoulement (9) est disposé dans la conduite d'écoulement principale (4) de manière réglable.

3. Dispositif selon la revendication 2,
**caractérisé en ce que**
l'angle d'incidence de l'élément d'accélération de l'écoulement (9) est réglable par rapport au sens d'écoulement principal (12) dans la conduite d'écoulement principale (4).

4. Dispositif selon la revendication 2 ou 3,
**caractérisé en ce que**
l'élément d'accélération de l'écoulement (9) est disposé dans le sens longitudinal (13) de la conduite d'écoulement principale (4) de manière à pouvoir être déplacé.

5. Dispositif selon la revendication 2 - 4,
**caractérisé en ce que**
la forme de l'élément d'accélération de l'écoulement (9) est variable.

6. Dispositif selon l'une quelconque des revendications précédentes,
**caractérisé en ce**
**qu'**un entraînement à moteur (17) est prévu pour le réglage, le déplacement ou modifier la forme de l'élément d'accélération de l'écoulement (9).

7. Dispositif selon l'une quelconque des revendications précédentes,
**caractérisé en ce que**
l'élément d'accélération de l'écoulement (9) traverse la conduite d'écoulement principale (4) approximativement en son milieu.

8. Dispositif selon l'une quelconque des revendications précédentes,
**caractérisé en ce que**
l'élément d'accélération de l'écoulement (9) est disposé approximativement horizontalement dans la conduite d'écoulement principale (4).

9. Dispositif selon l'une quelconque des revendications précédentes,
**caractérisé en ce que**
l'élément d'accélération de l'écoulement (9) est disposé sur un axe de réglage (16) qui traverse transversalement la conduite d'écoulement principale (4).

10. Dispositif selon la revendication 9,
**caractérisé en ce que**
l'axe de réglage (16) peut être entraîné par un moteur.

11. Dispositif selon l'une quelconque des revendications précédentes,
**caractérisé en ce**
**qu'**une pluralité d'éléments d'accélération de l'écoulement (9) sont disposés les uns derrière les autres dans la conduite d'écoulement principale (4).

12. Dispositif selon l'une quelconque des revendications précédentes,
**caractérisé en ce que**
des éléments de guidage de l'écoulement (19) sont disposés aux extrémités (18) de l'élément/des éléments d'accélération de l'écoulement (9).

13. Dispositif selon l'une quelconque des revendications précédentes,
**caractérisé en ce**
**qu'**au moins un capteur de pression (20) est disposé dans la zone de l'élément/des éléments d'accélération de l'écoulement (9), et en ce que l'élément/les éléments d'accélération de l'écoulement (9) peut/peuvent être modifié(s) par un moteur en fonction de la valeur initiale du capteur de pression (20).

14. Dispositif selon l'une quelconque des revendications précédentes,
**caractérisé en ce que**
des éléments d'écoulement (22) sont disposés dans la conduite d'écoulement principale (4) en amont et/ou en aval de l'élément d'accélération de l'écoulement (9).

15. Dispositif selon l'une quelconque des revendications précédentes,
**caractérisé en ce que**
la au moins une conduite d'alimentation (5) ou de mélange (6) débouche par le haut dans la conduite d'écoulement principale (4).

16. Dispositif selon l'une quelconque des revendications précédentes,
**caractérisé en ce**
**qu'**un sas à roue cellulaire (23) est disposé dans la au moins une conduite d'alimentation (5) ou de mélange (6).

17. Dispositif selon l'une quelconque des revendications précédentes,
**caractérisé en ce que**
la plus grande section transversale (24) de l'élément d'accélération de l'écoulement (9) est disposée un peu en aval de l'axe longitudinal médian (25) de l'embouchure (10) de la conduite d'alimentation (5) ou de mélange (6).

18. Dispositif selon la revendication 5,
**caractérisé en ce que**
le profil de l'élément d'accélération de l'écoulement (9) est variable en fonction de la vitesse d'écoulement et/ou de la densité du fluide de transport (7) et/ou de la matière de base (8).

19. Dispositif selon l'une quelconque des revendications précédentes,
**caractérisé en ce**
**qu'**une pluralité de conduites de mélange (6) débouchent les unes derrière les autres dans la conduite d'écoulement principale (4), et en ce qu'un élément d'accélération de l'écoulement (9) est disposé sous chaque zone de l'embouchure d'une conduite de mélange (6).

20. Dispositif selon l'une quelconque des revendications précédentes,
**caractérisé en ce que**
l'élément d'accélération de l'écoulement (9) présente un revêtement de surface qui réduit l'abrasion (26).

21. Dispositif selon l'une quelconque des revendications précédentes,
**caractérisé en ce que**
la surface de l'élément d'accélération de l'écoulement (9) est trempée.

22. Dispositif selon l'une quelconque des revendications précédentes,
**caractérisé en ce que**
le revêtement de l'élément de guidage de l'écoulement (19) est un revêtement céramique (26).

23. Procédé pour éviter des flux d'air de fuite et/ou des accumulations de matière dans la zone de l'embouchure d'une conduite d'alimentation ou de mélange, qui débouche dans la conduite d'écoulement principale, à travers laquelle de la matière granulée ou poudreuse peut être amenée dans un flux d'air de transport de la conduite d'écoulement principale,
**caractérisé en ce que**
qu'un élément d'accélération de l'écoulement entouré des deux côtés par un flux avec une section transversale de profil en forme d'aile, disposé transversalement à l'embouchure de la conduite d'alimentation ou de mélange et réalisé comme élément séparé, permet de générer une dépression qui exerce sur la matière une force d'aspiration agissant dans le sens de la conduite d'écoulement principale.

24. Utilisation d'un dispositif présentant les caractéristiques d'une des revendications 1 à 22 pour le transport de résidus de combustion sous forme de granulés.

25. Utilisation du dispositif selon l'une quelconque des revendications 1 à 22 pour ajouter des liquides.
